# EUROPÄISCHE PATENTSCHRIFT

(11) **EP 3 592 677 B1**
(45) Veröffentlichungstag und Bekanntmachung des Hinweises auf die Patenterteilung: **05.05.2021**
(21) Anmeldenummer: 18711502.7
(22) Anmeldetag: 05.03.2018
(51) Int. Cl.: B65G 47/90, B65G 65/00, B66C 11/12, B66C 11/14, B66C 19/00, B62D 65/02

(54) **BEHÄLTERWECHSELSTATION**
CONTAINER CHANGING STATION
STATION DE CHANGEMENT DE CONTENANT

(30) Priorität: 08.03.2017 AT 501802017
(43) Veröffentlichungstag der Anmeldung: 15.01.2020
(73) Patentinhaber: TMS Turnkey Manufacturing Solutions GmbH, 4031 Linz (AT)
(72) Erfinder: SCHNITZHOFER, Nikolaus, 4040 Linz (AT); ROTH, Dominik, 4161 Ulrichsberg (AT); HOLZER, Erwin, 4311 Schwertberg (AT)
(74) Vertreter: Patentanwälte Pinter & Weiss OG
(86) Internationale Anmeldenummer: PCT/EP2018/055372
(87) Internationale Veröffentlichungsnummer: WO 2018/162425

(56) Entgegenhaltungen:
- EP-A1- 2 543 615
- EP-A1- 2 682 357
- DE-A1- 10 257 594
- DE-A1- 10 308 680
- DE-A1- 19 519 643
- DE-U1-202009 012 532
- DE-U1-202011 107 239
- DE-U1-202013 103 913
- JP-B2- 3 402 511
- US-A- 5 160 237

## Beschreibung

Die gegenständliche Erfindung betrifft eine Behälterwechselstation mit einer Abstellposition zum Zuführen und Entnehmen von Behältern für Bauteile und einer Bereitstellungsposition zum Entnehmen der Bauteile aus einem Behälter, wobei in der Behälterwechselstation eine Fördereinrichtung vorgesehen ist, um einen Behälter von der Abstellposition in die Bereitstellungsposition zu verfahren, wobei die Behälterwechselstation zwei übereinander angeordnete Ebenen für Behälter aufweist, wobei im oberen Bereich der Behälterwechselstation eine Behälterbewegungseinrichtung angeordnet ist, die einen Querschlitten und eine am Querschlitten angeordnete Hebeeinrichtung umfasst, wobei der Querschlitten zwischen der Abstellposition und der Bereitstellungsposition verfahrbar angeordnet ist und die Hebeeinrichtung eine Aufnahmeeinrichtung zum Aufnehmen eines Behälters und einen Hubantrieb zum Heben der Aufnahmeeinrichtung zwischen zwei Ebenen der Behälterwechselstation aufweist. Ferner betrifft die Erfindung eine Anordnung mit zumindest zwei solchen, benachbart angeordneten Behälterwechselstationen und ein Verfahren zum Durchführen eines Behälterwechsels mit einer erfindungsgemäßen Behälterwechselstation.

In Produktionsprozessen, beispielsweise in der Fertigung von Produkten, werden Objekte, die im Produktionsprozess benötigt werden, beispielsweise Komponenten oder Bauteile eines Produktes, oftmals in Behältern zu einer Fertigungsstation geliefert, in denen Objekte aus dem Behälter entnommen werden, vorzugsweise mit einer Handhabungseinrichtung, wie z.B. ein Roboter, und einem Produktionsprozess in der Fertigungsstation zugeführt werden. Ein typisches Beispiel hierfür ist eine Fertigungsstation zur Fertigung von Rohkarosserien von Fahrzeugen. Karosseriebauteile werden hierfür in Behältern zugeführt und in einer Fügestation als Fertigungsstation entnommen, um in der Fügestation mit anderen Karosserieteilen verbunden zu werden, beispielsweise zu einem Unterboden eines Fahrzeugs. Um einen reibungslosen Ablauf des Produktionsprozess ohne Unterbrechungen sicherzustellen, ist im Bereich der Fertigungsstation oftmals eine Behälterwechselstation vorgesehen, in der volle Behälter zugeführt und leere Behälter entfernt werden können. Auf diese Weise wird sichergestellt, dass in der Fertigungsstation ständig benötigte Komponenten verfügbar sind. Der volle Behälter wird in der Behälterwechselstation in eine Bereitstellungsposition gebracht, an der Objekte aus dem Behälter entnommen werden können. Ein leerer Behälter wird dazu vorher aus der Bereitstellungsposition in eine Entnahmeposition gebracht, aus der der leere Behälter aus der Behälterwechselstation entfernt werden kann.

Ein Beispiel für eine solche Behälterwechselstation findet sich in der DE 102 57 594 A1. Darin ist im Bereich der Bereitstellungsposition eine Hubsäule angeordnet, mit der ein leerer Behälter angehoben werden kann, um die Bereitstellungsposition für einen neuen vollen Behälter freizugeben. Der leere Behälter wird oberhalb der vollen Behälter mit einem Linearförderer in eine Entnahmeposition oberhalb einer Zuführposition von vollen Behältern gebracht. Damit erfolgt die Entnahme leerer Behälter in einer anderen Ebene als die Zuführung voller Behälter, was die Anforderungen an die Handhabung der Behälter (Zuführung, Entnahme) im Bereich der Behälterwechselstation erhöht.

Ebenso bekannt sind Behälterwechselstationen, in denen die Entnahmeposition und die Zuführposition zusammenfallen. Dabei wird ein leerer Behälter in der Bereitstellungsposition zuerst in eine Zwischenposition oberhalb der Entnahmeposition gebracht. Daraufhin wird ein voller Behälter in die nun freie Entnahmeposition zugeführt und von dort in die Bereitstellungsposition verfahren, woraufhin der leere Behälter aus der Zwischenposition in die Entnahmeposition abgesenkt werden kann. Auch in dieser Ausführung ist in der Behälterwechselstation eine Hubsäule, hier zwischen der Bereitstellungsposition und der Entnahmeposition, vorgesehen, um die Behälter in der Behälterwechselstation zu verfahren.

Eine Hubsäule in der Behälterwechselstation beansprucht allerdings Bauraum, in der Breite und/oder der Tiefe der Behälterwechselstation, weshalb eine möglichst kompakte Ausführung der Behälterwechselstation nicht realisierbar ist.

Ebenso ist die Anordnung einer Abtrennung zwischen der Bereitstellungsposition und dem Rest der Behälterwechselstation nur schwer zu realisieren, was aber aus Sicherheitsanforderungen oftmals gefordert. Das trifft vor allem bei einer Hubsäule zwischen der Bereitstellungsposition und der Entnahmeposition zu. Eine solche Abtrennung ist insbesondere, aber nicht nur, dort gefordert, wo volle Behälter durch Menschen in die Behälterwechselstation gefördert werden und eine automatische Handhabungseinrichtung Bauteile aus dem Behälter in der Bereitstellungsposition entnimmt. Aus Sicherheitsgründen ist daher oftmals eine bauliche Trennung des Bereichs in dem die Handhabungseinrichtung agiert und dem Bereich, in dem Behälter zugeführt oder entnommen werden, gefordert.

Neben der in der DE 102 57 594 A1 gezeigten Behälterwechselstationen mit Hubsäule zeigt z.B auch die DE 20 2013 103 913 U1 eine Behälterwechselstationen mit Hubsäule. Daneben gibt es auch noch eine Reihe anderer Behälterwechselstationen, z.B. ist in der DE 10 2009 000 897 A1 eine Behälterwechselstationen mit einem drehbaren Gestell offenbart. Die DE 20 2009 012 532 U1 zeigt eine Behälterwechselstation mit vertikal verfahrbaren Telesekophubgabeln, die DE 10 2016 216 574 B3 eine Behälterwechselstation mit zwei kombinierten Vertikal-Horizontalfördereinrichtungen. Für den Transport von Behältern für Halbleiterbauelemente zwischen zwei Bearbeitungsstationen ist in der US 2006/0045662 A1 eine Art Portalkran offenbart und in der JP S61145098 A ist ein Portalkran auf einem Schiff zur Bewegung von Containern gezeigt.

Die US 5,160,237 offenbart eine Behälterwechselstation mit einer Grundplatte, auf der zwei Behälter auf Trägern in einer unteren Ebene zwischen zwei Positionen verschiebbar angeordnet sind. Zusätzlich ist eine Hebeeinrichtung vorgesehen, die mittels Rollen in Schienen am Boden zwischen den beiden Positionen verschiebbar ist. Zum Behälterwechsel kann die Hebeeinrichtung einen Träger der Behälter anheben und von einer Position in die andere Position bewegen. Der jeweilige Behälter auf der unteren Ebene wird währenddessen gegengleich zur Hebeeinrichtung in die jeweils andere (freie) Position bewegt. Nachteilig ist, dass die Behälterwechselstation seitlich relativ viel Platz zur Anordnung der verschiebbaren Hebeeinrichtung benötigt. Insbesondere wenn mehrere Behälterwechselstationen nebeneinander angeordnet werden muss zwischen zwei Behälterwechselstationen ein zusätzlicher Platz vorgesehen werden, um die Zugänglichkeit zu den jeweiligen Hebeeinrichtungen zu gewährleisten. Weiters ist es nachteilig, dass die Hebeeinrichtung am Boden verfahrbar ist, weil dadurch unter Umständen die Sicherheit von Personen gefährdet wird US5160237A offenbart eine Behälterwechselstation nach dem Oberbegriff des Anspruchs 1, eine Anordnung aus zumindest zwei benachbarten Behälterwechselstationen nach dem Oberbegriff des Anspruchs 3 sowie ein Verfahren zum Durchführen eines Behälterwechsels in einer Behälterwechselstation nach dem Oberbegriff des Anspruchs 4.

Es ist nun die Aufgabe der gegenständlichen Erfindung eine Behälterwechselstation anzugeben, die möglichst kompakt ausgeführt werden kann, um insbesondere den seitlichen Platzbedarf zu reduzieren, die die Sicherheit für Personen erhöht und die zugleich für Wartungszwecke leicht zugänglich ist.

Diese Aufgabe wird erfindungsgemäß dadurch gelöst, dass die Behälterwechselstation in Form einer Portalkonstruktion mit Portalsäulen ausgebildet ist, die durch Portalträger miteinander verbunden sind, wobei der obere Bereich, in dem die Behälterbewegungseinrichtung angeordnet ist, oberhalb der zwei Ebenen der Behälterwechselstation liegt und wobei der Querschlitten auf einer an den Portalträgern vorgesehenen Führungskonstruktion angeordnet ist. Durch das Anordnen der Behälterbewegungseinrichtung im oberen Bereich, oberhalb der zwei Ebenen der Behälterwechselstation, kann die Grundfläche der Behälterwechselstation klein gehalten werden, womit diese sehr kompakt ausgeführt werden kann.

Ganz besonders vorteilhaft ist zwischen der Abstellposition und der Bereitstellungsposition eine Trennwand vorgesehen, mit der der Weg zwischen der Abstellposition und der Bereitstellungsposition, vorzugsweise mittels eines Trennwandantriebs, versperrbar und freigebbar ist. Die Trennwand kann einfach und ohne zusätzliche Grundfläche angeordnet werden. Damit lässt sich auch auf einfache Weise eine sichere Abtrennung der Abstellposition und der Bereitstellungsposition realisieren.

Die erfindungsgemäße Behälterwechselstation lässt sich auch in vorteilhafter Weise zu einer Anordnung aus zumindest zwei benachbarten Behälterwechselstationen kombinieren, wobei in den zumindest zwei Behälterwechselstationen jeweils eine Abstellposition zum Zuführen und Entnehmen von Behältern für Bauteile und eine Bereitstellungsposition zum Entnehmen der Bauteile aus einem Behälter vorgesehen sind, wobei in den zumindest zwei Behälterwechselstationen jeweils eine Fördereinrichtung vorgesehen ist, um einen Behälter von der Abstellposition in die Bereitstellungsposition zu verfahren, wobei die Behälterwechselstation zwei übereinander angeordnete Ebenen für Behälter aufweist, wobei im oberen Bereich der zumindest zwei benachbarten Behälterwechselstationen eine Behälterbewegungseinrichtung angeordnet ist, die einen Querschlitten und eine am Querschlitten angeordnete Hebeeinrichtung umfasst, wobei der Querschlitten zwischen der Abstellposition und der Bereitstellungsposition verfahrbar angeordnet ist und die Hebeeinrichtung eine Aufnahmeeinrichtung zum Aufnehmen eines Behälters und einen Hubantrieb zum Heben der Aufnahmeeinrichtung zwischen zwei Ebenen der Behälterwechselstationen aufweist, wobei die Behälterwechselstation in Form einer Portalkonstruktion mit Portalsäulen ausgebildet ist, die durch Portalträger miteinander verbunden sind, wobei der obere Bereich, in dem die Behälterbewegungseinrichtung angeordnet ist, oberhalb der zwei Ebenen der Behälterwechselstation liegt, wobei die Behälterbewegungseinrichtung einen Längsschlitten aufweist, der auf einer an den Portalträgern vorgesehenen Führungskonstruktion zwischen den zumindest zwei benachbarten Behälterwechselstationen verfahrbar angeordnet ist und wobei der Querschlitten auf einer am Längsschlitten vorgesehenen Führungskonstruktion verfahrbar angeordnet ist. Durch diese Ausführung wird nur eine einzige Behälterbewegungseinrichtung benötigt, die alle Positionen der Behälterwechselstationen der Anordnung bedienen kann. Damit kann der konstruktive Aufwand und die Kosten für eine solche Anordnung deutlich reduziert werden. Durch einen derartigen modularen Aufbau ist zudem auch eine einfache Erweiterung um eine beliebige Anzahl weiterer Behälterwechselstationen möglich, was eine einfache Anpassung an die Anforderungen verschiedener Produktionsprozesse ermöglicht.

Vorzugsweise wird mit der erfindungsgemäßen Behälterwechselstation ein Verfahren zum Durchführen eines Behälterwechsels realisiert, bei dem ein leerer Behälter in der Bereitstellungsposition mit einer Behälterbewegungseinrichtung im oberen Bereich der Behälterwechselstation in einer ersten Ebene der Bereitstellungsposition ergriffen wird und mit der Behälterbewegungseinrichtung in eine zweite Ebene gehoben (wobei damit das Absenken oder das Anheben umfasst wird) wird, ein voller Behälter aus der Abstellposition mittels einer Fördereinrichtung in die leere Bereitstellungsposition verfahren wird, der leere Behälter mit der Behälterbewegungseinrichtung in der Abstellposition abgestellt wird, wobei der obere Bereich oberhalb zwei Ebenen der Behälterwechselstation liegt. Sobald ein leerer Behälter in der Abstellposition abgestellt wurde, kann der leere Behälter in der Abstellposition gegen einen neuen vollen Behälter ausgetauscht werden, womit in der Behälterwechselstation immer ein voller Behälter mit Objekten vorrätig gehalten werden kann.

Die Sicherheit der Behälterwechselstation kann erhöht werden, wenn der leere Behälter in der Abstellposition erst ausgetauscht wird, wenn der Weg zwischen der Abstellposition und der Bereitstellungsposition durch eine Trennwand versperrt ist. Das ist insbesondere dort vorteilhaft, wo Behälter von Bedienpersonal im Bereich der Behälterwechselstation gehandhabt werden, beispielsweise in die Behälterwechselstation zugeführt werden, und in Objekte von einer automatisierten Handhabungseinrichtung, wie einem Roboter, aus einem Behälter in der Bereitstellungsposition entnommen werden. Durch die Trennwand lässt sich auf einfache Weise eine strikte Trennung des Bereichs der Behälterwechselstation in denen Bedienpersonal hantiert und des Bereichs in dem die Handhabungseinrichtung hantiert realisieren.

Die gegenständliche Erfindung wird nachfolgend unter Bezugnahme auf die Figuren 1 bis 7 näher erläutert, die beispielhaft, schematisch und nicht einschränkend vorteilhafte Ausgestaltungen der Erfindung zeigen. Dabei zeigt
Fig.1 eine erfindungsgemäße Behälterwechselstation,
Fig.2 eine Anordnung mehrerer Behälterwechselstationen mit verbindendem Längsschlitten,
Fig.3 eine Seitenansicht einer erfindungsgemäßen Behälterwechselstation,
Fig.4 eine Draufsicht einer Anordnung mit mehreren Behälterwechselstationen,
Fig.5 eine Detailansicht der Behälterbewegungseinrichtung einer erfindungsgemäßen Behälterwechselstation,
Fig.6 eine bevorzugte Ausgestaltung einer Aufnahmeeinrichtung für einen Behälter und
Fig.7 eine bevorzugte Ausgestaltung einer Fördereinrichtung in einer erfindungsgemäßen Behälterwechselstation.

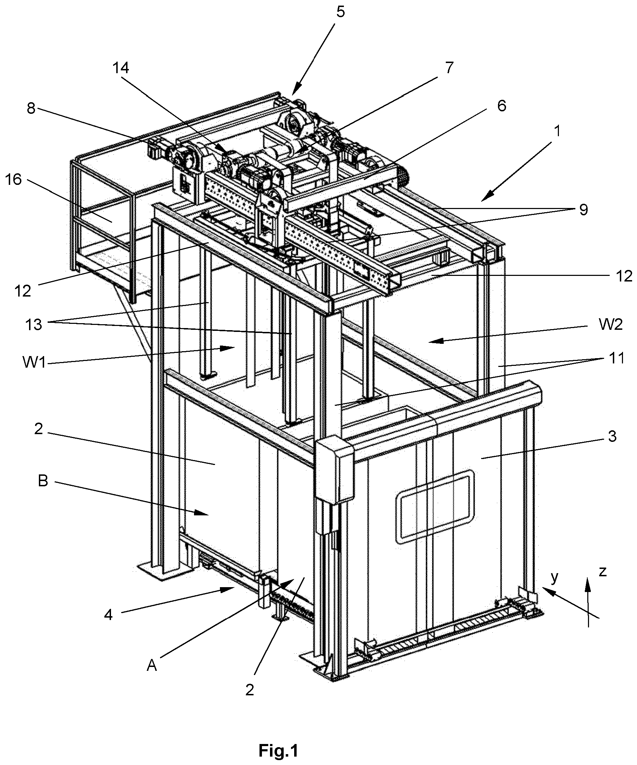

Die Fig.1 zeigt eine erfindungsgemäße Behälterwechselstation 1 für Behälter 2 zur Aufnahme von Objekten (nicht dargestellt), die an einer Bereitstellungsposition B der Behälterwechselstation 1, vorzugsweise von einer automatisierten Handhabungseinrichtung, wie z.B. einem Roboter, aus dem Behälter 2 entnommen werden. Volle Behälter 2 werden an einer Abstellposition A in die Behälterwechselstation 1 zugeführt. Vorzugsweise ist vor der Abstellposition A ein Tor 3 vorgesehen, um die Abstellposition A vom Außenraum abzutrennen und zugänglich machen zu können. Ein voller Behälter 2 wird von außerhalb der Behälterwechselstation 1 an der Abstellposition A abgestellt. Das kann mittels geeigneter Fördertechnik, mittels Gabelstapler, fahrerlosen Transportsystemen oder auch mittels Routenzug, automatisch oder manuell, erfolgen. Auch eine nachträgliche Umrüstung von einer Fördertechnik auf eine andere ist grundsätzlich möglich. Wie ein Behälter 2 außerhalb der Behälterwechselstation 1 befördert wird oder in die Behälterwechselstation 1 zugeführt wird, ist allerdings nicht Gegenstand der Erfindung. Im Falle eines Tores 3 wird das Tor 3 geöffnet und ein voller Behälter 2 durch das offene Tor 3 in die Behälterwechselstation 1 befördert und an der Abstellposition A abgestellt und danach das Tor 3 vorzugsweise wieder geschlossen.

Die Abstellposition A und die Bereitstellungsposition B sind in der Behälterwechselstation 1 durch eine Fördereinrichtung 4 derart miteinander verbunden, dass mit der Fördereinrichtung 4 ein Behälter 2 von der Abstellposition A in die Bereitstellungsposition B in Zuführrichtung y verfahren werden kann. Die Fördereinrichtung 4 ist im gezeigten Ausführungsbeispiel im Bereich des Bodens der Behälterwechselstation 1 angeordnet, was aber nicht zwangsweise der Fall sein muss. Es ist grundsätzlich jede beliebige geeignete Fördereinrichtung 4 an jeder beliebigen geeigneten Stelle in der Behälterwechselstation 1 denkbar, beispielsweise ein Kettenförderer, ein Rollenförderer, eine lineare Vorschubeinrichtung, Gurtförderer, Teleskopgabel, usw. Am einfachsten und damit bevorzugt sind lineare Fördereinrichtungen 4. Der Antrieb der Fördereinrichtung 4 ist ebenfalls beliebig und kann beispielsweise elektrisch, pneumatisch oder hydraulisch sein. Ein Behälter 2 und die Fördereinrichtung 4 weisen hierfür geeignete, zusammenwirkende koppelbare und lösbare Kopplungseinrichtungen auf. Ebenso kann in der Bereitstellungsposition B und/oder der Abstellposition A auch eine Halteeinrichtung vorgesehen sein, um einen Behälter 2 in der gewünschten Lage zu Positionieren und/oder zu Fixieren.

Die erfindungsgemäße Behälterwechselstation 1 weist zwei Ebenen auf, die in der Höhe (z-Richtung) zumindest soweit beabstandet sind, dass zwei Behälter 2 übereinander Platz finden. In der unteren Ebene ist vorzugsweise die Abstellposition A und die Bereitstellungsposition B vorgesehen. Die obere Ebene dient vorzugsweise dem Behälterwechsel. Hierzu wird in der bevorzugten Ausführung ein leerer Behälter 2 aus der Bereitstellungsposition B mittels einer Behälterbewegungseinrichtung 5 in die obere zweite Ebene in eine erste Wechselposition W1 angehoben. Auf die nun freie Bereitstellungsposition B kann ein voller Behälter 2 mit der Fördereinrichtung 4 aus der Abstellposition A in die Bereitstellungsposition B verfahren werden. Gleichzeitig, oder auch zu einem anderen Zeitpunkt, wird der angehobene leere Behälter 2 mit der Behälterbewegungseinrichtung 5 aus der ersten Wechselposition W1 oberhalb der Bereitstellungsposition B in eine zweite Wechselposition W2 oberhalb der Abstellposition A, die nun frei ist, verfahren. Der leere Behälter 2 kann nun mit der Behälterbewegungseinrichtung 5 aus der zweiten Wechselposition W2 oberhalb der freien Abstellposition A in die Abstellposition A abgesenkt werden, von der der leere Behälter 2 aus der Behälterwechselstation 1 entnommen werden kann. Gegebenenfalls ist dafür ein Tor 3 zu öffnen. Nach dem Entnehmen des leeren Behälters 2 kann ein voller Behälter 2 an der Abstellposition A abgestellt werden.

Es können natürlich gleichzeitig sinnvoller Weise bis zu drei Behälter 2, theoretisch auch gleichzeitig vier Behälter 2, in der Behälterwechselstation 1 vorhanden sein. Wenn ein Behälter 2 in der Bereitstellungsposition B von der Handhabungseinrichtung entleert wird, kann bereits ein voller Behälter 2 in die Abstellposition A zugeführt werden. Ein leerer Behälter 2 kann dabei in der zweiten Ebene vorhanden sein. Wenn in der Behälterwechselstation 1 allerdings keine Vorkehrungen zum Abstellen eines Behälters 2 in der zweiten Ebene vorgesehen sind, was den konstruktiven Aufwand erhöhen würde, und ein Behälter 2 damit nur mit der Behälterbewegungseinrichtung 5 in der zweiten Ebene gehalten werden kann, dann sind sinnvoller Weise maximal zwei Behälter 2 gleichzeitig in der Behälterwechselstation 1 vorgesehen, da ansonsten kein Behälterwechsel durchgeführt werden kann.

Ebenso ist es natürlich denkbar, dass die erste Ebene mit der Abstellposition A und der Bereitstellungsposition B oben und die zweite Ebene unterhalb angeordnet ist. Grundsätzlich wäre es sogar möglich, die Abstellposition A und die Bereitstellungsposition B auf unterschiedlichen Ebenen anzuordnen. Für eine einfache Handhabung der Behälterwechselstation 1 ist es jedoch vorteilhaft, wenn die Entnahme und die Zuführung von Behältern an derselben Position in der Behälterwechselstation 1, nämlich der Abstellposition A, erfolgt.

Um die Behälterwechselstation 1 möglichst kompakt ausführen zu können, ist die Behälterbewegungseinrichtung 5 in Form eines Querschlittens 6 mit einer Hebeeinrichtung 7 ausgeführt, der eine Bewegung in der Zuführrichtung y ermöglicht. Der Querschlitten 6 ist im oberen Bereich der Behälterwechselstation 1 angeordnet und kann zwischen der Abstellposition A und der Bereitstellungsposition B, bzw. zwischen der ersten Wechselstation W1 und der zweiten Wechselstation W2, verfahren werden. Der Querschlitten 6 kann zur Bewegung einen eigenen Querschlittenantrieb 8 aufweisen, kann aber auch durch einen externen Antrieb angetrieben sein. Ebenso ist natürlich eine geeignete Energieversorgung für den Querschlitten 6 vorgesehen. Der Querschlitten 6 kann beispielsweise in Form einer Laufkatze, beispielsweise eine zweischienige Laufkatze wie in Fig.1 dargestellt, ausgeführt sein. Der Querschlitten 6 ist an der Behälterwechselstation 1 an einer Führungskonstruktion 9 im oberen Bereich der Behälterwechselstation 1 zwischen der Abstellposition A und der Bereitstellungsposition B bewegbar angeordnet. Die Hebeeinrichtung 7, die am Querschlitten 6 angeordnet ist, umfasst eine Aufnahmeeinrichtung 13, die mit einem Behälter 2 koppelbar ist und die durch einen beliebigen, geeigneten Hubantrieb 14 gehoben, im Sinne von anheben oder absenken, werden kann. Der Hubantrieb 14 ist beispielsweise als Riemenantrieb, Seilantrieb, mit Teleskopsäulen, als Scherenhubantrieb, usw. ausgeführt. Mit der Hebeeinrichtung 7 kann somit ein Behälter 2 ergriffen, angehoben, abgesenkt und wieder entkoppelt werden. Wesentlich ist, dass der Querschlitten 6 mit der Hebeeinrichtung 7 im oberen Bereich der Behälterwechselstation 1, also insbesondere oberhalb der ersten und zweiten Ebene der Behälterwechselstation 1, bzw. oberhalb der Abstellposition A, Bereitstellungsposition B und den Wechselpositionen W1, W2 der Behälterwechselstation 1, angeordnet ist. Damit ist zum Heben eines Behälter 2 keine Hubsäule oder ähnliches im Bereich der Abstellposition A oder der Bereitstellungsposition B erforderlich, wodurch die Behälterwechselstation 1 in der Grundfläche sehr kompakt gebaut werden kann. Ein solcher Querschlitten 6 mit Hebeeinrichtung 7 kann auch mit geringer Bauhöhe (in z-Richtung) ausgeführt werden, wodurch die Höhe der Behälterwechselstation 1 beschränkt werden kann. In der Regel ist in einer Fertigungshalle, in der die Behälterwechselstation 1 eingesetzt wird, in der Höhe ausreichend Platz bis zum Hallendach vorhanden, um einen solchen Querschlitten 6 mit Hebeeinrichtung 7 anordnen zu können, wohingegen die Grundfläche der Fertigungshalle sehr beschränkt ist.

Die Behälterwechselstation 1 wird in Form einer Portalkonstruktion ausgeführt, mit Portalsäulen 11, die durch Portalträger 12 miteinander verbunden sind. Auf Portalträgern 12 im oberen Bereich der Behälterwechselstation 1 ist dann die Führungskonstruktion 9 für den Querschlitten 6 angeordnet oder Portalträger 12 können auch als Führungskonstruktion 9 ausgeführt sein.

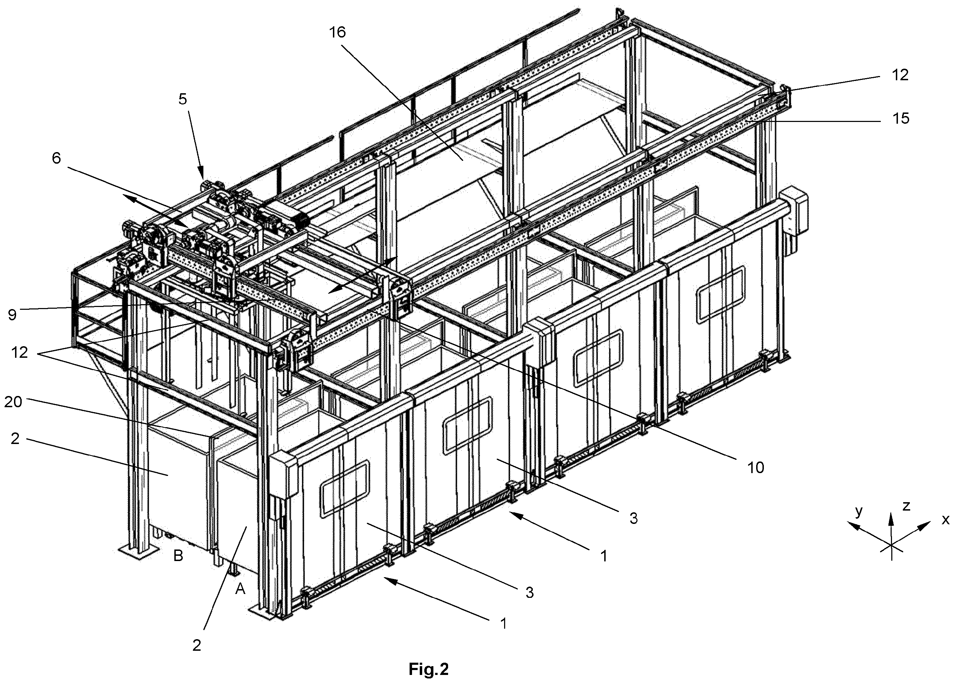

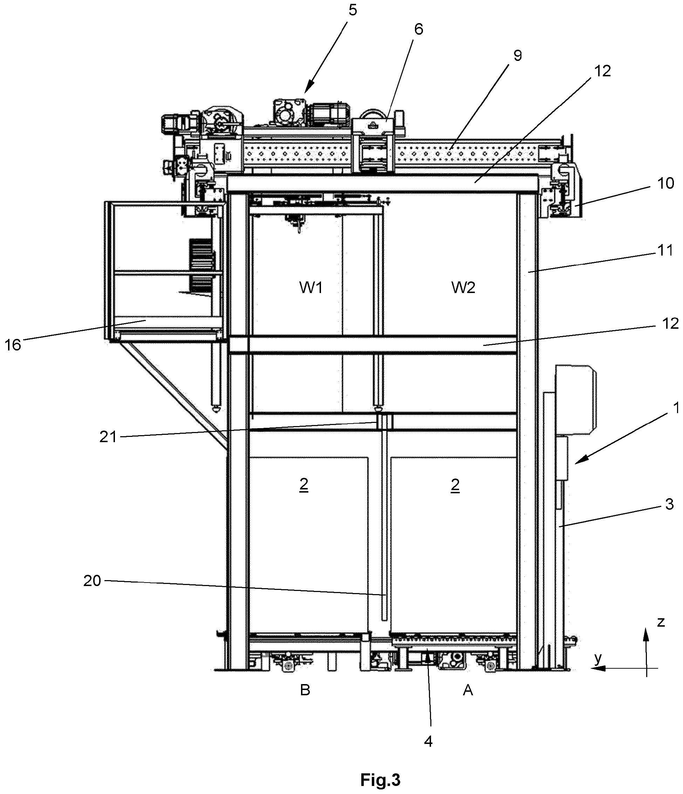

Ferner können nun mehrere solcher Behälterwechselstationen 1 nebeneinander angeordnet werden, wie nachfolgend mit Bezugnahme auf die Fig.2 bis 4 erläutert wird. Das ermöglicht eine einfache modulare Erweiterung durch weitere Behälterwechselstationen 1, was auch die Flexibilität erhöht. Hierfür könnte jede Behälterwechselstation 1 den eigenen Querschlitten 6 mit Hebeeinrichtung 7 aufweisen, wie in Fig.1 dargestellt. Wesentlich besser ist es jedoch zumindest zwei benachbarte Behälterwechselstationen 1 im oberen Bereich durch die Behälterbewegungseinrichtung 5 miteinander zu verbinden, sodass die Behälterbewegungseinrichtung 5 nicht nur zwischen den einzelnen Positionen einer Behälterwechselstation 1, sondern auch zwischen benachbarten Behälterwechselstationen 1 hin und her verfahrbar ist. Das ist in den Fig.2 bis 4 dargestellt. Dazu wird die Behälterbewegungseinrichtung 5 um einen Längsschlitten 10 erweitert, wobei der Längsschlitten 10 in Längsrichtung x zwischen benachbarten Behälterwechselstationen 1 hin und her verfahrbar ist. Am Längsschlitten 10 ist dann der Querschlitten 6, bzw. die Führungskonstruktion 9 für den Querschlittens 6, mit der Hebeeinrichtung 7 angeordnet, wie in Fig.2 für vier nebeneinander angeordneten Behälterwechselstationen 1 dargestellt ist. Die Führungskonstruktion 15 für den Längsschlitten 10 ist im oberen Bereich der Behälterwechselstation 1 angeordnet. Der Längsschlitten 10 kann vorzugsweise als Portalkran ausgeführt sein, der an der Portalkonstruktion angeordnet ist. Beispielsweise können Portalträger 12 im oberen Bereich der Portalkonstruktion die Führungskonstruktion 15 für den Längsschlitten 10 ausbilden oder diese tragen. Damit kann mit der Behälterbewegungseinrichtung 5 jede Position in jeder der zumindest zwei Behälterwechselstationen 1 erreicht werden. Es ist damit für die zumindest zwei Behälterwechselstationen 1 nur eine einzige Behälterbewegungseinrichtung 5 erforderlich. Grundsätzlich müssten die zumindest zwei miteinander verbundenen Behälterwechselstationen 1 nicht einmal unmittelbar benachbart angeordnet sein. Aus Sicht einer möglichst kleinen Grundfläche ist es allerdings vorteilhaft, wenn diese unmittelbar benachbart angeordnet sind. Es könnte aber zwischen zwei Behälterwechselstationen 1 in Längsrichtung x Platz gelassen werden, beispielsweise, um eine bessere Zugänglichkeit zu einer Fertigungsstation zu ermöglichen.

Auch ein Längsschlitten 10 kann mit geringer Bauhöhe realisiert werden, sodass durch den zusätzlichen Längsschlitten 10 kaum mehr Bauhöhe für die Behälterwechselstationen 1 benötigt wird.

An der Behälterwechselstation 1 kann im oberen Bereich auch eine Wartungsplattform 16 vorgesehen sein, um die Behälterbewegungseinrichtung 5, oder Teile davon, einfacher warten zu können. Die Antriebe für die Behälterbewegungseinrichtung 5, also insbesondere der Querschlittenantrieb 8 (beispielsweise ein Elektromotor mit Getriebe) und der Längsschlittenantrieb 23 (beispielsweise ein Elektromotor mit Getriebe) und der Hubantrieb 14, sind dabei vorzugsweise von der Wartungsplattform 16 zugänglich.

Im Ausführungsbeispiel nach der Fig.2 bis 4 ist in einer Behälterwechselstation 1 ferner eine Trennwand 20 zwischen der Abstellposition A und der Bereitstellungsposition B vorgesehen. Die Trennwand 20 kann mittels eines geeigneten, nur angedeuteten Trennwandantriebs 21 den Weg zwischen der Abstellposition A und der Bereitstellungsposition B freigeben oder versperren. Beispielsweise kann die Trennwand 20 angehoben und abgesenkt werden. Damit kann die Bereitstellungsposition B nur dann erreicht werden, wenn die Trennwand 20 beispielsweise vorher angehoben wurde, was eine sichere Abtrennung des Bereichs der Behälterwechselstation 1 ermöglicht, in der eine automatische Handhabungseinrichtung bewegt wird. Das ermöglicht es auf einfache Weise ein Sicherheitskonzept zu realisieren, mit dem sichergestellt werden kann, dass ein Behälter 2 von außen nur dann in einer Abstellposition A abgesetzt oder von dieser entnommen werden kann, wenn die Trennwand 20 zwischen der Abstellposition A und der Bereitstellungsposition B angeordnet ist. Das lässt sich beispielsweise einfach durch eine entsprechende Steuerung oder Blockierung des Tores 3 erreichen. Beispielsweise kann die Steuerung so ausgeführt werden, dass das Tor 3 nur dann geöffnet werden kann, wenn die Trennwand 20 zwischen der Abstellposition A und der Bereitstellungsposition B angeordnet ist.

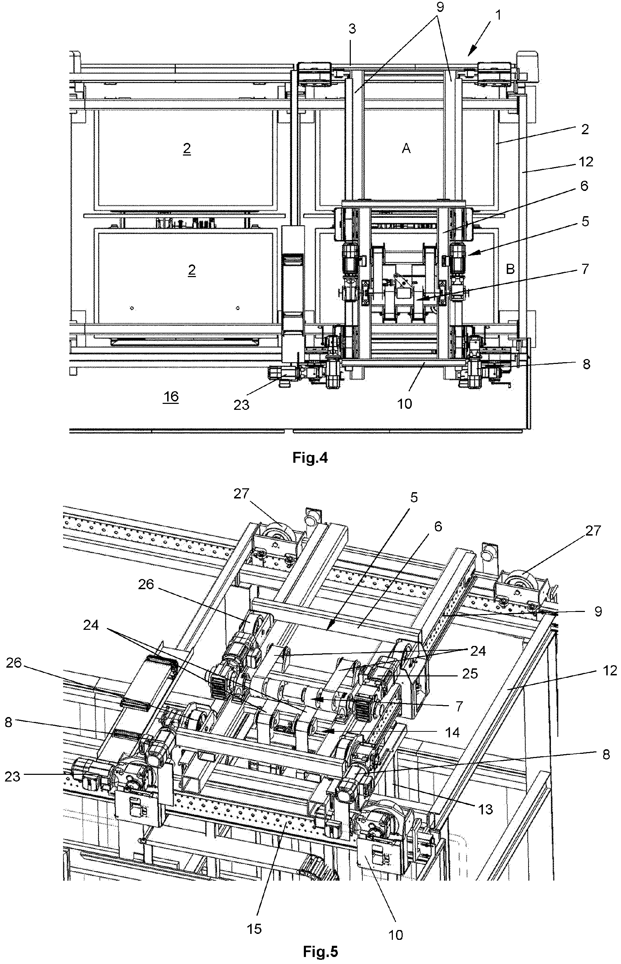

In Fig.5 ist eine Detailansicht einer vorteilhaften Behälterbewegungseinrichtung 5 dargestellt. Die Hebeeinrichtung 7 umfasst hier einen Hubantrieb 14 in Form von Riemen 24, die mittels eines Riemenantriebs 25 (beispielsweise ein Elektromotor mit Getriebe) angetrieben sind. Der Querschlitten 6 ist als zweischienige Laufkatze mit Laufrädern 26 mit eigenem Querschlittenantrieb 8 ausgeführt. Die Laufräder 26 sind an der Führungskonstruktion 9 angeordnet, die wiederum am Längsschlitten 10 angeordnet ist. Der Längsschlitten 10 ist als zweischieniger Portalkran mit Laufrädern 27 mit eigenem Längsschlittenantrieb 23 ausgeführt.

Gemäß einer besonders vorteilhaften Ausführungsform der Erfindung kann ein Antrieb und/oder eine Energieversorgung eines Antriebs der Behälterbewegungseinrichtung 5 auch redundant ausgeführt sein, um die Ausfallsicherheit zu erhöhen und Stehzeiten im Produktionsprozess zu vermeiden. Dabei können beispielsweise zusätzlich ein zweiter Riemenantrieb 25, ein zweiter Querschlittenantrieb 8 und/oder ein zweiter Längsschlittenantrieb 23 vorgesehen sein. Ebenso könnten die Energieversorgungen für diese Antriebe redundant ausgeführt sein. Auch sonstige Antriebe der Behälterwechselstation 1, und/oder deren Energieversorgungen, könnten redundant ausgeführt sein. Beispiels hierfür sind der Antrieb der Fördereinrichtung 4 oder ein Trennwandantrieb 21 der Trennwand 20. Dadurch kann im Falle eines Defektes einer ersten Antriebseinheit (Riemenantrieb 25, Querschlittenantrieb 22, Längsschlittenantrieb 23, Antrieb der Fördereinrichtung 4, usw.) und/oder im Falle einer Unterbrechung der Energieversorgung einer ersten Antriebseinheit jedenfalls der weitere Betrieb der Behälterwechselstation 1 gewährleistet werden.

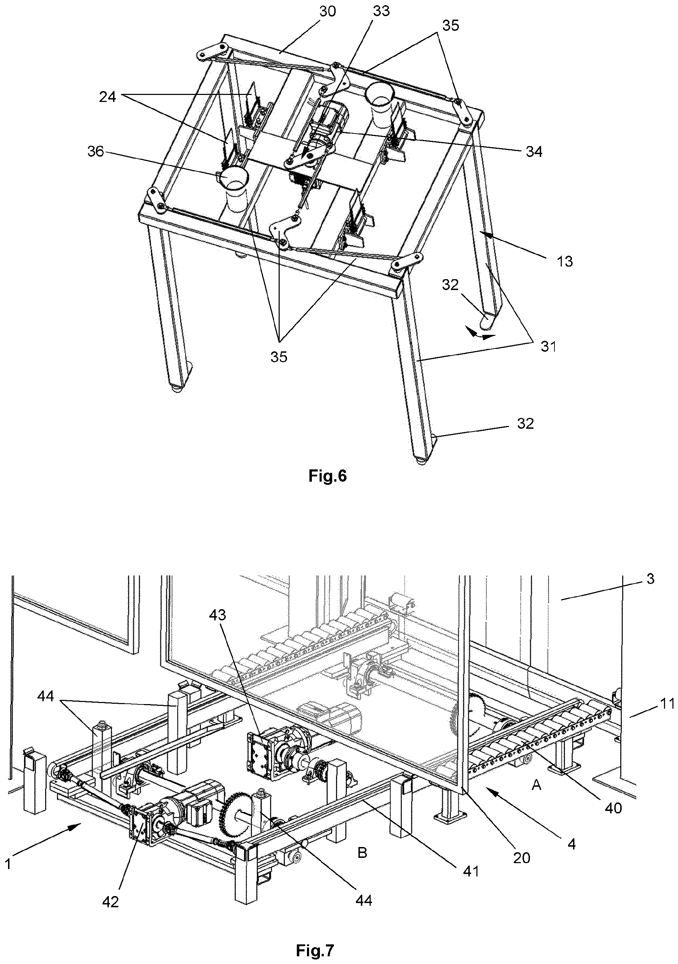

Mit Fig.6 wird eine bevorzugte Ausführung der Aufnahmeeinrichtung 13 der Hebeeinrichtung 7 beschrieben. Die Aufnahmeeinrichtung 13 besteht in dieser Ausgestaltung aus einem Grundrahmen 30, von dem vier Aufnahmesäulen 31 abstehen. An den Enden der Aufnahmesäulen 31 sind verschwenkbare Koppelglieder 32 vorgesehen, die durch einen Koppelantrieb 33 zwischen einer Koppelposition und einer Entkoppelposition verschwenkt werden können (in Fig.6 angedeutet durch den Doppelpfeil). Der Koppelantrieb 33 ist hier am Grundrahmen 30 angeordnet und umfasst einen Antriebsmotor 34, der über ein Koppelgestänge 35 die Koppelglieder 32 verschwenkt. Weiters können am Grundrahmen 30 Zentriereinrichtungen 36 angeordnet sein, mit denen die Aufnahmeeinrichtung 13 in einer angehobenen Stellung an der Behälterbewegungseinrichtung 5, beispielsweise an dort angeordneten Zentrierdornen, ausgerichtet und gehalten werden kann.

Zur Aufnahme eines Behälters 2 werden die Koppelglieder 32 in die Entkoppelposition geschwenkt, die Aufnahmeeinrichtung 13 abgesenkt, bis die Koppelglieder 32 unterhalb eines Behälters 2 zu liegen kommen. Dann werden die Koppelglieder 32 in die Koppelposition geschwenkt, womit diese mit dem Behälter 2 in Eingriff kommen. Damit kann der Behälter 2 mit der Hebeeinrichtung 7 gehoben werden. Am Behälter 2 können aber natürlich auch an beliebiger Stelle Vorsprünge, Ausnehmung und ähnliches vorgesehen sein, in denen die Koppelglieder 32 einschwenken, angreifen oder in sonstiger Weise in Eingriff kommen.

Mit Fig.7 wird eine bevorzugte Ausführung der Fördereinrichtung 4 beschrieben. Im Bereich der Abstellposition A ist hierbei eine Rollenbahn 40 vorgesehen. Ein Behälter 2 kann von außen auf die Rollenbahn 40 abgestellt und beispielsweise von Hand in die Abstellposition A geschoben werden. Ein Kettenförderer 41 kann durch einen Hebeantrieb 43, beispielsweise ein Exzenterantrieb, angehoben und abgesenkt werden. Zum Zuführen eines Behälters 2 ist der Kettenförderer 41 gegenüber der Rollenbahn abgesenkt, damit der Behälter 2 auf der Rollenbahn 40 bewegt werden kann. Nach dem Abstellen des Behälters 2 an der Abstellposition A wird der Kettenförderer 41 angehoben und ergreift damit den Behälter 2. Durch den Kettenförderantrieb 42 wird der Behälter 2 mit dem Kettenförderer 41 von der Abstellposition A in die Bereitstellungsposition B verfahren. Dort kann der Kettenförderer 41 wieder abgesenkt werden, sodass der Behälter 2 an einer geeigneten Halteeinrichtung 44 an der Bereitstellungsposition B abgesetzt, positioniert und gehalten wird.

## Patentansprüche

1. Behälterwechselstation mit einer Abstellposition (A) zum Zuführen und Entnehmen von Behältern (2) für Objekte und einer Bereitstellungsposition (B) zum Entnehmen der Objekte aus einem Behälter (2), wobei in der Behälterwechselstation (1) eine Fördereinrichtung (4) vorgesehen ist, um einen Behälter (2) von der Abstellposition (A) in die Bereitstellungsposition (B) zu verfahren, wobei die Behälterwechselstation (1) zwei übereinander angeordnete Ebenen für Behälter (2) aufweist, wobei im oberen Bereich der Behälterwechselstation (1) eine Behälterbewegungseinrichtung (5) angeordnet ist, die einen Querschlitten (6) und eine am Querschlitten (6) angeordnete Hebeeinrichtung (7) umfasst, wobei der Querschlitten (6) zwischen der Abstellposition (A) und der Bereitstellungsposition (B) verfahrbar angeordnet ist und die Hebeeinrichtung (7) eine Aufnahmeeinrichtung (13) zum Aufnehmen eines Behälters (2) und einen Hubantrieb (14) zum Heben der Aufnahmeeinrichtung (13) zwischen zwei Ebenen der Behälterwechselstation (1) aufweist, **dadurch gekennzeichnet, dass** die Behälterwechselstation in Form einer Portalkonstruktion mit Portalsäulen (11) ausgebildet ist, die durch Portalträger (12) miteinander verbunden sind, wobei der obere Bereich, in dem die Behälterbewegungseinrichtung (5) angeordnet ist, oberhalb der zwei Ebenen der Behälterwechselstation (1) liegt und wobei der Querschlitten (6) auf einer an den Portalträgern (12) vorgesehenen Führungskonstruktion (9) angeordnet ist.

2. Behälterwechselstation nach Anspruch 1, **dadurch gekennzeichnet, dass** zwischen der Abstellposition (A) und der Bereitstellungsposition (B) eine Trennwand (20) vorgesehen ist, mit der der Weg zwischen der Abstellposition (A) und der Bereitstellungsposition (B), vorzugsweise mittels eines Trennwandantriebs (21), versperrbar und freigebbar ist.

3. Anordnung aus zumindest zwei benachbarten Behälterwechselstationen (1), wobei in den zumindest zwei Behälterwechselstationen (1) jeweils eine Abstellposition (A) zum Zuführen und Entnehmen von Behältern (2) für Objekte und eine Bereitstellungsposition (B) zum Entnehmen der Objekte aus einem Behälter (2) vorgesehen sind, wobei in den zumindest zwei Behälterwechselstationen (1) jeweils eine Fördereinrichtung (4) vorgesehen ist, um einen Behälter (2) von der Abstellposition (A) in die Bereitstellungsposition (B) der jeweiligen Behälterwechselstation (1) zu verfahren, wobei die Behälterwechselstation (1) zwei übereinander angeordnete Ebenen für Behälter (2) aufweist, wobei im oberen Bereich der zumindest zwei benachbarten Behälterwechselstationen (1) eine Behälterbewegungseinrichtung (5) angeordnet ist, die einen Querschlitten (6) und eine am Querschlitten (6) angeordnete Hebeeinrichtung (7) umfasst, wobei der Querschlitten (6) zwischen der Abstellposition (A) und der Bereitstellungsposition (B) verfahrbar angeordnet ist und die Hebeeinrichtung (7) eine Aufnahmeeinrichtung (13) zum Aufnehmen eines Behälters (2) und einen Hubantrieb (14) zum Heben der Aufnahmeeinrichtung (13) zwischen zwei Ebenen der zumindest zwei Behälterwechselstationen (1) aufweist, **dadurch gekennzeichnet, dass** die Behälterwechselstation in Form einer Portalkonstruktion mit Portalsäulen (11) ausgebildet ist, die durch Portalträger (12) miteinander verbunden sind, wobei der obere Bereich, in dem die Behälterbewegungseinrichtung (5) angeordnet ist, oberhalb der zwei Ebenen der Behälterwechselstation (1) liegt, wobei die Behälterbewegungseinrichtung (5) einen Längsschlitten (10) aufweist, der auf einer an den Portalträgern (12) vorgesehenen Führungskonstruktion (15) zwischen den zumindest zwei benachbarten Behälterwechselstationen (1) verfahrbar angeordnet ist und wobei der Querschlitten (6) auf einer am Längsschlitten (10) vorgesehenen Führungskonstruktion (9) verfahrbar angeordnet ist.

4. Verfahren zum Durchführen eines Behälterwechsels in einer Behälterwechselstation (1) in Form einer Portalkonstruktion mit Portalsäulen (11), die durch Portalträger (12) miteinander verbunden sind, mit einer Abstellposition (A) zum Zuführen und Entnehmen von Behältern (2) für Objekte und einer Bereitstellungsposition (B) in einer ersten Ebene der Behälterwechselstation (1) zum Entnehmen der Objekte aus einem Behälter (2), **dadurch gekennzeichnet, dass** ein leerer Behälter (2) in der Bereitstellungsposition (B) mit einer, im oberhalb der zwei Ebenen liegenden oberen Bereich der Behälterwechselstation (1) vorgesehenen Behälterbewegungseinrichtung (5) ergriffen wird und mit einer, an einem, auf einer an den Portalträgern (12) vorgesehenen Führungskonstruktion (9) zwischen der Abstellposition (A) und der Bereitstellungsposition (B) verfahrbaren Querschlitten (6) der Behälterbewegungseinrichtung (5) angeordneten Hebeeinrichtung (7) in eine zweite Ebene der Behälterwechselstation (1) gehoben wird, ein voller Behälter (2) aus der Abstellposition (A) mittels einer Fördereinrichtung (4) in die leere Bereitstellungsposition (B) verfahren wird, der leere Behälter (2) mit der Behälterbewegungseinrichtung (5) in der Abstellposition (A) abgestellt wird.

5. Verfahren nach Anspruch 4, **dadurch gekennzeichnet, dass** der leere Behälter (2) in der Abstellposition (A) gegen einen neuen vollen Behälter (2) ausgetauscht wird.

6. Verfahren nach Anspruch 5, **dadurch gekennzeichnet, dass** der leere Behälter (2) in der Abstellposition (A) erst ausgetauscht wird, wenn der Weg zwischen der Abstellposition (A) und der Bereitstellungsposition (B) durch eine Trennwand (20) versperrt ist.

## Claims

1. A container exchange station, having a placement position (A) for supplying and removing containers (2) for objects and a provision position (B) for removing the objects from a container (2), a conveyor device (4) being provided in the container exchange station (1) in order to move a container (2) from the placement position (A) to the provision position (B), the container exchange station (1) having two levels for containers (2) that are arranged one above the other, a container moving device (5) being arranged in the upper area of the container exchange station (1), which container moving device (5) comprises a transverse carriage (6) and a lifting device (7) that is arranged on the transverse carriage (6), the transverse carriage (6) being arranged so as to be movable between the placement position (A) and the provision position (B), and the lifting device (7) having a receiving device (13) for receiving a container (2) and a lifting drive (14) for lifting the receiving device (13) between two levels of the container exchange station (1), **characterized in that** the container exchange station is designed in the form of a portal structure comprising portal columns (11) that are connected to one another by portal supports (12), the upper area in which the container moving device (5) is arranged being situated above the two levels of the container exchange station (1), and the transverse carriage (6) being arranged on a guide structure (9) that is provided on the portal supports (12).

2. The container exchange station according to claim 1, **characterized in that** a partition (20) is provided between the placement position (A) and the provision position (B), by means of which partition the path between the placement position (A) and the provision position (B) can be blocked and cleared, preferably by means of a partition drive (21).

3. An arrangement of at least two adjacent container exchange stations (1), a placement position (A) for supplying and removing containers (2) for objects and a provision position (B) for removing the objects from a container (2) being provided in each of the at least two container exchange stations (1), a conveyor device (4) being provided in each of the at least two container exchange stations (1) in order to move a container (2) from the placement position (A) to the provision position (B) of the relevant container exchange station (1), the container exchange station (1) having two levels for containers (2) that are arranged one above the other, a container moving device (5) being arranged in the upper area of the at least two adjacent container exchange stations (1), which container moving device (5) comprises a transverse carriage (6) and a lifting device (7) that is arranged on the transverse carriage (6), the transverse carriage (6) being arranged so as to be movable between the placement position (A) and the provision position (B), and the lifting device (7) having a receiving device (13) for receiving a container (2) and a lifting drive (14) for lifting the receiving device (13) between two levels of the at least two container exchange stations (1), **characterized in that** the container exchange station is designed in the form of a portal structure comprising portal columns (11) that are connected to one another by portal supports (12), the upper area in which the container moving device (5) is arranged being situated above the two levels of the container exchange station (1), the container moving device (5) having a longitudinal carriage (10) that is arranged on a guide structure (15) that is provided on the portal supports (12) so as to be movable between the at least two adjacent container exchange stations (1), and the transverse carriage (6) being movably arranged on a guide structure (9) that is provided on the longitudinal carriage (10).

4. A method for carrying out a container exchange in a container exchange station (1) in the form of a portal structure comprising portal columns (11) that are connected to one another by portal supports (12), said container exchange station (1) comprising a placement position (A) for supplying and removing containers (2) for objects and a provision position (B) at a first level of the container exchange station (1) for removing the objects from a container (2), **characterized in that** an empty container (2) in the provision position (B) is grasped by a container moving device (5) that is provided in the upper area of the container exchange station (1) situated above the two levels and lifted to a second level of the container exchange station (1) by a lifting device (7) that is arranged on a transverse carriage (6) of the container moving device (5) that can be moved between the placement position (A) and the provision position (B) on a guide structure (9) provided on the portal supports (12), a full container (2) is moved from the placement position (A) to the empty provision position (B) by means of a conveyor device (4), and the empty container (2) is placed by the container moving device (5) in the placement position (A).

5. The method according to claim 4, **characterized in that** the empty container (2) in the placement position (A) is exchanged for a new full container (2).

6. The method according to claim 5, **characterized in that** the empty container (2) in the placement position (A) is only exchanged when the path between the placement position (A) and the provision position (B) is blocked by a partition (20).

## Revendications

1. Station de changement de contenant, comportant une position de dépôt (A) permettant d'amener et de retirer des contenants (2) destinés à des objets et une position de mise à disposition (B) permettant de retirer les objets d'un contenant (2), un dispositif de transport (4) étant prévu dans la station de changement de contenant (1) pour déplacer un contenant (2) de la position de dépôt (A) à la position de mise à disposition (B), la station de changement de contenant (1) présentant deux niveaux disposés l'un au-dessus de l'autre et destinés aux contenants (2), un dispositif de déplacement de contenant (5) étant disposé dans la zone supérieure de la station de changement de contenant (1), lequel comprend un chariot transversal (6) et un dispositif de levage (7) disposé sur le chariot transversal (6), le chariot transversal (6) étant disposé mobile entre la position de dépôt (A) et la position de mise à disposition (B) et le dispositif de levage (7) présentant un dispositif de réception (13) permettant de recevoir un contenant (2) et un entraînement de levage (14) permettant de soulever le dispositif de réception (13) entre deux niveaux de la station de changement de contenant (1), **caractérisée en ce que** la station de changement de contenant est conçue sous la forme d'une structure de portail comportant des colonnes de portail (11), lesquelles sont reliées les unes aux autres par des supports de portail (12), la zone supérieure dans laquelle est disposé le dispositif de déplacement de contenant (5) étant située au-dessus des deux niveaux de la station de changement de contenant (1) et le chariot transversal (6) étant disposé sur une structure de guidage (9) prévue sur les supports de portail (12).

2. Station de changement de contenant selon la revendication 1, **caractérisée en ce qu'**une cloison (20) est prévue entre la position de dépôt (A) et la position de mise à disposition (B), le chemin entre la position de dépôt (A) et la position de mise à disposition (B) pouvant être bloqué et libéré par ladite cloison, de préférence au moyen d'un entraînement de cloison (21).

3. Installation constituée d'au moins deux stations de changement de contenant adjacentes (1), une position de dépôt (A) permettant d'amener et de retirer des contenants (2) destinés à des objets et une position de mise à disposition (B) permettant de retirer les objets d'un contenant (2) étant respectivement prévues dans les au moins deux stations de changement de contenant (1), un dispositif de transport (4) étant respectivement prévu dans les au moins deux stations de changement de contenant (1) afin de déplacer un contenant (2) de la position de dépôt (A) à la position de mise à disposition (B) de la station de changement de contenant respective (1), la station de changement de contenant (1) présentant deux niveaux disposés l'un au-dessus de l'autre et destinés à des contenants (2), un dispositif de déplacement de contenant (5) étant disposé dans la zone supérieure des au moins deux stations de changement de contenant adjacentes (1), lequel comprend un chariot transversal (6) et un dispositif de levage (7) disposé sur le chariot transversal (6), le chariot transversal (6) étant disposé mobile entre la position de dépôt (A) et la position de mise à disposition (B) et le dispositif de levage (7) présentant un dispositif de réception (13) permettant de recevoir un contenant (2) et un entraînement de levage (14) permettant de soulever le dispositif de réception (13) entre deux niveaux des au moins deux stations de changement de contenant (1), **caractérisée en ce que** la station de changement de contenant est conçue sous la forme d'une structure de portail comportant des colonnes de portail (11), lesquelles sont reliées les unes aux autres par des supports de portail (12), la zone supérieure dans laquelle est disposé le dispositif de déplacement de contenant (5) étant située au-dessus des deux niveaux de la station de changement de contenant (1), le dispositif de déplacement de contenant (5) présentant un chariot longitudinal (10), lequel est disposé mobile sur une structure de guidage (15) prévue sur les supports de portail (12) entre les au moins deux stations de changement de contenant adjacentes (1), et le chariot transversal (6) étant disposé mobile sur une structure de guidage (9) prévue sur le chariot longitudinal (10).

4. Procédé de réalisation d'un changement de contenant dans une station de changement de contenant (1) sous la forme d'une structure de portail comportant des colonnes de portail (11), lesquelles sont reliées les unes aux autres par des supports de portail (12), comportant une position de dépôt (A) permettant d'amener et de retirer des contenants (2) destinés à des objets et, dans un premier niveau de la station de changement de contenant (1), une position de mise à disposition (B) permettant de retirer les objets d'un contenant (2), **caractérisé en ce qu'un** contenant vide (2) dans la position de mise à disposition (B) est saisi par un dispositif de déplacement de contenant (5) prévu dans la zone supérieure de la station de changement de contenant (1) située au-dessus des deux niveaux et est soulevé dans un second niveau de la station de changement de contenant (1) au moyen d'un dispositif de levage (7) disposé sur un chariot transversal (6) du dispositif de déplacement de contenant (5), le chariot transversal étant mobile entre la position de dépôt (A) et la position de mise à disposition (B) sur une structure de guidage (9) prévue sur les supports de portail (12), un contenant plein (2) étant déplacé de la position de dépôt (A) à la position de mise à disposition vide (B) au moyen d'un dispositif de transport (4), le contenant vide (2) étant déposé dans la position de dépôt (A) par le dispositif de déplacement de contenant (5).

5. Procédé selon la revendication 4, **caractérisé en ce que** le contenant vide (2) dans la position de dépôt (A) est remplacé par un nouveau contenant plein (2).

6. Procédé selon la revendication 5, **caractérisé en ce que** le contenant vide (2) dans la position de dépôt (A) n'est remplacé que si le chemin entre la position de dépôt (A) et la position de mise à disposition (B) est bloqué par une cloison (20).
